# EUROPÄISCHE PATENTSCHRIFT

(11) **EP 2 799 234 B1**
(45) Veröffentlichungstag und Bekanntmachung des Hinweises auf die Patenterteilung: **12.07.2017**
(21) Anmeldenummer: 13166038.3
(22) Anmeldetag: 30.04.2013
(51) Int. Cl.: B32B 27/32, C08L 3/02, C08L 23/02

(54) **Mehrschichtige durch Coextrusion hergestellte Folie, insbesondere Verpackungsfolie**
Multilayer film produced by co-extrusion, in particular packaging film
Film multicouches fabriqué par coextrusion, notamment film d'emballage

(43) Veröffentlichungstag der Anmeldung: 05.11.2014
(73) Patentinhaber: Mondi AG, 1030 Wien (AT)
(72) Erfinder: Hawighorst, Joachim, 49124 Georgsmarienhütte (DE)
(74) Vertreter: Lorenz, Bernd Ingo Thaddeus

(56) Entgegenhaltungen:
- WO-A1-2007/118828
- WO-A1-2011/009165

## Beschreibung

Die Erfindung betrifft eine mehrschichtige, durch Coextrusion hergestellte Folie, insbesondere Verpackungsfolie, mit einer aus einer Kernschichtmischung gebildeten Kernschicht, einer Siegelschicht aus einer siegelfähigen Siegelschichtmischung und einer bedruckbaren Außenschicht aus einer Außenschichtmischung.

Mehrschichtige Folien, die in der Praxis für Verpackungszwecke verwendet werden, bestehen aus ölbasierten Polymeren. Ziel ist es, einen Anteil der ölbasierten Polymere durch einen nachwachsenden Rohstoff zu ersetzen, um den Verbrauch von endlichen, fossilen Rohstoffen reduzieren und die CO₂-Bilanz zu verbessern. Aus EP 2 456 620 A ist es bekannt, einen Teil der ölbasierten Polymere durch thermoplastische Stärke zu ersetzen.

Ein noch ungelöstes Problem besteht darin, die notwendige Gleitfähigkeit der Folie zu erreichen. Die Siegelschicht, die bei einer Verwendung der Folie für Beutelverpackungen die Beutelinnenseite bildet, muss sehr glatt sein, um aus der Folie Beutel zur Verpackung von weichen Hygieneprodukten, z. B. Windeln, hergestellt werden sollen. Bei der Verpackung solcher Produkte werden vorkonvektionierte Beutel geöffnet, und anschließend wird ein Bündel aus häufig zusammengepressten Produkten als Paket in den geöffneten Beutel geschoben, wobei das Füllgut an der Beutelinnenwand entlang gleitet. Ist die Folie zu stumpf, lässt sich die angestrebte hohe Abpackgeschwindigkeit nicht erreichen und es entstehen Probleme wie faltige, unverschlossene oder zerrissene Beutel.

Es ist bekannt, zur Folienherstellung Polymermischungen zu verwenden, die Gleitmittel enthalten, welche an die Oberfläche der Folie migrieren und dort eine Gleitschicht ausbilden. Da die Migration zeit-, temperatur- und druckabhängig ist, können migrierende Gleitmittel allerdings auch Probleme verursachen, weil die Bedingungen häufig schwanken. Nicht migrierende Gleitmittel sind zwar bekannt; sie sind jedoch weniger wirksam als migrierende Gleitmittel. Bei der Verwendung von Gleitmitteln in Polymermischungen, die als Mischungskomponente thermoplastische Stärke enthalten, ergibt sich ein weiteres Problem. In Versuchen, die nicht zum Stand der Technik gehören, wurde festgestellt, dass Folien, die aus einer Polymermischung mit einem hohen Stärkeanteil extrudiert werden, eine stumpfe Oberfläche aufweisen. Die Zugabe eines Gleitmittels in einer für Polyolefinfolien üblichen Menge zur Siegelschichtmischung führte nicht zu der gewünschten Verbesserung der Gleitfähigkeit an der Beutelinnenseite der aus der Folie gefertigten Beutel. Auch eine Erhöhung des Gleitmittelanteils bewirkte nicht die notwendige Verbesserung und hatte zusätzlich den Nachteil, dass die Siegelnahtfestigkeit mit zunehmenden Gleitmittelanteil abnehmen kann und außerdem bei der Extrusion der Folie verstärkt die Gefahr auftritt, dass sich an der Extrusionsdüse Ablagerungen am Düsenspalt bilden.

Aus WO 2011/009165 A1 ist eine mehrschichtige Folie bekannt, bei der eine Kernschicht zwischen zwei Außenschichten angeordnet ist. Die Kernschicht wird aus einem Kernschichtmaterial gebildet, das neben Polyethylen als Hauptkomponente Stärke, ein Ethylen-Acrylsäure-Copolymer als Kompatibilisator und fakultativ Zusätze zur Verbesserung der Verarbeitbarkeit des Kernschichtmaterials enthält. Die Außenschichten gemäß WO 2011/009165 A1 bestehen im Wesentlichen aus einem Polyethylen, dem ein Gleitmittel zugesetzt sein kann.

Der Erfindung liegt vor diesem Hintergrund das technische Problem zugrunde, eine mehrschichtige, durch Coextrusion hergestellte Folie der eingangs genannten Art anzugeben, die sich durch eine gute Siegelbarkeit auszeichnet und auf der Seite der Siegelschicht einen geringen Reibungskoeffizient aufweist.

Gegenstand der Erfindung und Lösung dieser Aufgabe ist eine mehrschichtige, durch Coextrusion hergestellte Folie nach Anspruch 1.

Die Kernschichtmischung, die Siegelschichtmischung und die Außenschichtmischung der erfindungsgemäßen Coextrusionsfolie enthalten jeweils zumindest 5 Gew.-% einer Stärke und jeweils zumindest ein synthetisches Polymer. Dabei ist in der Kernschichtmischung und der Siegelschichtmischung jeweils ein Gleitmittel enthalten, wobei der Gleitmittelanteil der Kernschichtmischung mindestens 20 % des Gleitmittelanteils der Siegelschichtmischung beträgt. Der Gleitmittelanteil bezeichnet dabei den prozentualen Gewichtsanteil des Gleitmittels in der betreffenden Schicht. Die bedruckbare Außenschicht enthält kein Gleitmittel.

Die Erfindung beruht auf der überraschenden Feststellung, dass sich eine Folie mit einem niedrigen Reibungskoeffizienten an der Seite der Siegelschicht einstellen lässt, wenn das Gleitmittel nicht nur der Siegelschichtmischung sondern auch der Kernschichtmischung der angrenzenden Kernschicht zugegeben wird. Der Effekt ist darauf zurückzuführen, dass Stärke eine hohe Affinität zu dem Gleitmittel, beispielsweise einem Fettsäureamid, aufweist und die Migration des Gleitmittels an die Oberfläche der Siegelschicht hindert. Dabei ist auch das Konzentrationsgefälle zwischen dem Gleitmittelanteil in der Siegelschicht und in der Kernschicht von Einfluss. Hinzu kommt, dass der Stärkeanteil in der Kernschicht regelmäßig größer ist als in der Siegelschicht, wo der maximale Stärkeanteil durch die Forderung nach einer hohen Siegelnahtfestigkeit begrenzt ist. Wird nun auch die Kernschicht mit einem ausreichenden Gleitmittelanteil gesättigt, kann eine Migration von Gleitmittel aus der Siegelschicht in die Kernschicht hinein weitgehend verhindert werden. Der Gleitmittelanteil in der Siegelschicht ist folglich wirksamer.

Die Siegelschicht der erfindungsgemäßen mehrschichtigen Folie weist einen nach ISO 8295 gemessenen statischen Reibungswert (COF-coefficent of friction) von weniger als 0,4 auf. Vorzugsweise wird der Gleitmittelanteil in der Siegelschicht und der Kernschicht so festgelegt, dass der an der Oberfläche der Siegelschicht gemessene Reibungswert (COF) weniger als 0,25 beträgt. Ohne Weiteres ist ein COF-Wert von weniger als 0,20 realisierbar, gemessen an der Materialpaarung Folie/Folie.

Der Gleitmittelanteil der Kernschichtmischung ist so hoch, dass eine Migration des in der Siegelschicht enthaltenen Gleitmittels in Richtung der Kernschicht ausgeschlossen oder zumindest deutlich reduziert wird. Die erfindungsgemäße Aufteilung des Gleitmittels sowohl auf die Siegelschichtmischung als auch auf die Kernschichtmischung ermöglicht eine Reduzierung des Gleitmittelanteils in der Siegelschicht. Durch den geringeren Gleitmittelanteil in der Siegelschicht lässt sich die Bildung von Ablagerungen am Düsenspalt bei der Coextrusion verhindern und die Siegelfähigkeit der Siegelschicht verbessern. Im Ergebnis zeichnet sich ein mit Siegelnähten versehener, aus der erfindungsgemäßen mehrschichtigen Folie hergestellter Verpackungsbeutel durch eine hohe Siegelnahtfestigkeit aus. Der geringere Gleitmittelanteil in der Siegelschicht stellt zudem sicher, dass beim Aufwickeln der Folie keine Übertragung des Gleitmittels von der gleitmittelhaltigen Siegelschicht auf die gleitmittelfreie Außenschicht erfolgt. Der Gleitmittelanteil der Kernschicht kann dem Gleitmittelanteil der Siegelschichtmischung entsprechen. Vorzugsweise ist der Gleitmittelanteil der Siegelschichtmischung jedoch größer als der Gleitmittelanteil der Kernschicht. Gemäß einer bevorzugten Ausführung der Erfindung beträgt der Gleitmittelanteil der Kernschichtmischung 30 % bis 70 % bezogen auf den Gleitmittelanteil der Siegelschichtmischung.

Der Gleitmittelanteil der Siegelschichtmischung kann bis zu 6000 ppm betragen. Bevorzugt ist ein Gleitmittelanteil der Siegelschichtmischung von maximal 4500 ppm. Der Gleitmittelanteil der Kernschicht kann in einem Bereich von 500 ppm bis 6000 ppm variiert werden und beträgt vorzugsweise 1000 ppm bis 3000 ppm. Der Gleitmittelanteil der Siegelschichtmischung und der Kernschichtmischung können so eingestellt werden, dass der statische Reibungswert COF zwischen den Siegelschichten zweier identischer Folien kleiner als 0,25 ist, wobei Werte zwischen 0,10 und 0,15 erreicht werden.

Da das Gleitmittel zur Oberfläche der Folie migrieren kann, ist auch die Gesamtmenge an Gleitmittel für die Gebrauchseigenschaften von Bedeutung. Die Gleitmittelmenge lässt sich durch das Produkt aus dem Gleitmittelanteil (gemessen in ppm) und der Schichtdicke (gemessen in µm) quantitativ beschreiben. Die Gleitmittelmenge kann in der Siegelschicht zwischen 30.000 und 90.000 ppm x µm und in der Kernschicht zwischen 15.000 und 90.000 ppm x µm variiert werden, wobei in beiden Schichten ein Wert zwischen 30.000 und 60.000 ppm x µm bevorzugt ist.

Als Gleitmittel kann insbesondere ein Fettsäureamid eingesetzt werden. Vorzugsweise ist das Gleitmittel zumindest eine Komponente aus der Gruppe "Erucasäureamid, Ölsäureamid, Stearinsäureamid".

Die erfindungsgemäße Folie weist einen Stärkeanteil von vorzugsweise mehr als 10 Gew.-% auf, wobei sich dieser Wert auf die Gesamtmasse der Folie bezieht. Als Stärke kann beispielsweise Kartoffelstärke, Maisstärke oder Weizenstärke eingesetzt werden. Bevorzugt ist die Verwendung von thermoplastischer Stärke (TPS). Der Stärkeanteil der Kernschichtmischung ist vorzugsweise größer als der Stärkeanteil der Außenschichtmischung und/oder der Siegelschichtmischung. Ferner empfiehlt es sich, die Gesamtmenge der Stärke auf die Schichten so zu verteilen, dass der Stärkeanteil der Siegelschichtmischung kleiner ist als der Stärkeanteil der Außenschichtmischung. Gemäß einer Ausführungsform der Erfindung weist die bedruckbare Außenschicht bzw. die Außenschichtmischung einen Stärkeanteil von beispielsweise 10 bis 30 Gew.-%, vorzugsweise von etwa 18 bis 22 Gew.-% auf. Die Kernschicht hat vorteilhafterweise einen Stärkeanteil von mehr als 20 Gew.-%, wobei ein Stärkeanteil von 20 bis 30 Gew.-% bevorzugt ist. Die Siegelschichtmischung weist zweckmäßig einen Stärkeanteil zwischen 10 und 20 Gew.-% auf, wobei ein Stärkeanteil zwischen 12 und 16 Gew.-% bevorzugt ist.

Das synthetische Polymer, welches einen weiteren Hauptbestandteil der Polymermischung darstellt, ist insbesondere ein Polyolefin, vorzugsweise ein Polyethylen aus der Gruppe mLLDPE, LLDPE, LDPE, LMDPE. Der Polyethylenanteil in der bedruckbaren Außenschicht kann mehr als 50 Gew.-% betragen. Der Polyethylenanteil in der Kernschicht ist geringer und beträgt vorzugsweise weniger als 40 Gew.-%. In der Siegelschicht ist ein hoher Polyethylenanteil wiederum vorteilhaft. Bei allen zuvor beschriebenen Ausführungen kann das Polyethylen eine Mischung aus LDPE und LLDPE oder LDPE und LMDPE aufweisen.

Es ist möglich, dass das synthetische Polymer ein Blend aus einem Polyolefin und einem weiteren Polyolefin und/oder einem Polyester ist. Beispielsweise ist das Polyolefin ein Blend eines Polyethylens mit einem Polypropylen und/oder einem Polyolefin-Copolymer. Das Polyolefin-Copolymer umfasst beispielsweise ein Copolymerisat aus Ethylen mit einem α-Olefin, beispielsweise mit 1-Buten oder 1-Hexen. Es kann weiterhin 2 bis 15 Gew.-% eines Kompatibilisators enthalten sein. Hierfür eignen sich beispielsweise Ethylen-Copolymere wie EVA, EMA oder EAA. Auch mit Maleinsäureanhydrid gepfropfte Copolymere können geeignet sein. Gemäß einer vorteilhaften Ausführungsform der Erfindung ist das Polymer ein Blend verschiedenen Polyolefinen.

Die mehrschichtige Folie kann eine Dicke zwischen 10 µm und 200 µm aufweisen, wobei eine Folienstärke von etwa von 30 bis 100 µm bevorzugt ist und wobei die bedruckbare Außenschicht, die Kernschicht und die Siegelschicht gleiche oder annähernd gleiche Schichtstärken aufweisen können. Sofern höhere mechanische Festigkeiten gefordert sind, kann die Kernschicht auch dicker ausgebildet sein als die außenseitigen Schichten.

Die erfindungsgemäße Folie eignet sich als Verpackungsfolie beispielsweise zur Herstellung von Wicket-Beuteln. Aufgrund der geringen Reibungswerte der Siegelschicht, welche die Innenseite der Verpackungsbeutel bildet, ist sichergestellt, dass das Füllgut nach automatisiertem Öffnen eines vorkonvektionierten Beutels problemlos an der Beutelinnenwand entlang gleiten kann. Da durch die erfindungsgemäße Einmischung von Gleitmitteln nicht nur in die Siegelschicht sondern auch in die Kernschicht verhindert wird, dass das in die Siegelschichtmischung eingebrachte Gleitmittel in Richtung der an Stärke reichen Kernschicht migriert, kann der zur Einstellung eines niedrigen Reibungskoeffizienten (COF) notwendige Gleitmittelanteil in der Siegelschicht gering gehalten werden. Eine Minimierung des Gleitmittelanteils in der Siegelschicht begünstigt die Siegelfähigkeit und die Ausbildung fester Siegelnähte bei der Weiterverarbeitung der Folie zu Beuteln. Ferner trägt der geringe Gleitmittelanteil in der Siegelschicht dazu bei, dass das Gleitmittel nicht auf die Gegenseite der Folie übertragen wird. Die bedruckbare Außenschicht der erfindungsgemäßen Folie ist stumpfer als die Folienoberfläche auf der Siegelseite. Dies begünstigt eine Druckfarbenanhaftung sowie eine Kleberanhaftung, wenn an der Außenseite beispielsweise Folienstreifen aufkaschiert werden sollen. Bei alledem zeichnet sich die erfindungsgemäße Folie dadurch aus, dass ein signifikanter Anteil an ölbasierten Polymeren durch nachwachsende Rohstoffe - in Form von Stärke, z. B. Maisstärke - ersetzt werden kann.

Das nachfolgende Ausführungsbeispiel in Tabelle 1 sowie zwei Vergleichsbeispiele in Tabelle 2 beziehen sich auf eine mehrschichtige Folie, die eine bedruckbare Außenschicht mit einer Außenschichtmischung aus einem Stärke-Compound und Polyethylen, eine Kernschicht mit einer Kernschichtmischung aus Stärke-Compound und Polyethylen sowie eine Siegelschicht mit einer Siegelschichtmischung aus einem Stärke-Compound und Polyethylen aufweist. Das Stärke-Compound enthält 66 % thermoplastische Stärke. Darin sind 64 % native Stärke und 20 % natürliche Verarbeitungshilfsmittel wie Glycerol und Sorbitol. Der Anteil der nachwachsenden Rohstoffe im Stärke-Compound beträgt somit 66 %. Die Folie wird als coextrudierte Blasfolie gefertigt und hat eine Foliendicke von 60 µm, wobei der Außenschicht, die Kernschicht sowie die Siegelschicht jeweils eine gleiche Schichtstärke von 20 µm aufweisen. Die Folienrezepturen des Ausführungsbeispiels und der beiden Vergleichsbeispiele unterscheiden sich nur hinsichtlich der Zumischung eines Gleitmittels, wobei als Gleitmittel in allen Fällen ein Erucasäureamid verwendet wurde. Im Ausführungsbeispiel (Tabelle 1) ist das Gleitmittel (Erucasäureamid) mit einem Anteil von 1500 ppm in der Kernschicht sowie mit einem Anteil von 3000 ppm in der Siegelschicht enthalten. In den Vergleichsbeispielen (Tabelle 2) enthält lediglich die Siegelschichtmischung das Gleitmittel.

An der Siegelschicht der Folie wurden Reibwertmessungen durchgeführt. Die Reibwerte (COF) wurden nach ISO 8295 gemessen, wobei die angegebenen Messwerte sich auf die Materialpaarung Folie/Folie beziehen. Je höher der statische Reibwert liegt, desto stumpfer ist die Folie.

Die erfindungsgemäße Folie zeichnet sich durch einen an der Siegelschicht gemessenen niedrigen Reibwert aus. Die Folienoberfläche an der Siegelschicht ist sehr glatt.

Das Vergleichsbeispiel 1 (Tabelle 2) unterscheidet sich von dem Ausführungsbeispiel der Erfindung lediglich dadurch, dass die Kernschicht kein Gleitmittel enthält. Aus einer vergleichenden Betrachtung der Tabellen 1 und 2 geht hervor, dass dieselbe Folienrezeptur ohne Gleitmittel in der Kernschicht auf der Siegelseite einen deutlich höheren Reibwert aufweist.

In dem Vergleichsbeispiel 2 wurde der Gleitmittelanteil der Siegelschicht erhöht. Die gesamte Gleitmittelmenge, die im Ausführungsbeispiel auf die Kernschicht und die Siegelschicht aufgeteilt wurde, wurde der Siegelschichtmischung zugegeben. Der gemessene Reibwert ist im Vergleichsbeispiel 2 schlechter als im Ausführungsbeispiel (Tabelle 1). Der hohe Gleitmittelanteil in der Siegelschicht wirkt sich ferner nachteilig auf die Funktionseigenschaften der Folie aus. So wird die Siegelfähigkeit und die erreichbare Siegelnahtfestigkeit durch den hohen Gleitmittelanteil beeinträchtigt. Ferner führt der hohe Gleitmittelanteil zu Ablagerungen am Düsenspalt bei der Coextrusion. Schließlich besteht das Problem, dass der hohe Gleitmittelanteil in der Siegelschicht dazu führen kann, dass das Gleitmittel auf die Gegenseite der Folie übertragen wird, wenn die Folie zu einer Rolle aufgewickelt wird. Dieser Effekt wird als "Abklatsch" bezeichnet. Die bedruckbare Außenschicht wird durch einen solchen Abklatsch glatt, was zu Problemen bei der Weiterverarbeitung der Folie führen kann. So lassen sich Beutel, die an der Beutelaußenseite glatt sind, schlecht stapeln. Ferner wird die Druckfarbenanhaftung beeinträchtigt, wenn die bedruckbare Außenschicht Anteile des Gleitmittels aufweist.

**Tabelle 1 (Ausführungsbeispiel der Erfindung)**

| | |
|---|---|
| Bedruckbare Außenschicht (15µm): | |
| | 40 % Stärke-Compound⁺⁾ |
| | Polyethylen (LDPE+LMDPE) |
| Kernschicht (30 µm): | |
| | 50 % Stärke-Compound⁺⁾ |
| | Polyethylen (LDPE+LLDPE) |
| | 1500 ppm Erucasäureamid |
| Siegelschicht (15 µm): | |
| | 30 % Stärke-Compound⁺⁾ |
| | Polyethylen LDPE+LLDPE |
| | 3000 ppm Erucasäureamid |
| Statischer Reibwert (COF gemessen nach ISO 8295) | |
| an der Siegelschicht: 0,18 | |

| | |
|---|---|
| ⁺⁾ Stärke-Compound: 66 % TPS (Stärke plus native Verarbeitungshilfsmittel), Kompatibilisatoren und Polyolefin | |

**Tabelle 2**

| | |
|---|---|
| Vergleichsbeispiel 1 | |
| Bedruckbare Außenschicht (15µm): | |
| | 40 % Stärke-Compound⁺⁾ |
| | Polyethylen (LDPE+LMDPE) |
| Kernschicht (30µm): | |
| | 50 % Stärke-Compound⁺⁾ |
| | Polyethylen (LDPE+LLDPE) |
| Siegelschicht (15µm): | |
| | 30 % Stärke-Compound⁺⁾ |
| | Polyethylen (LDPE+LLDPE) |
| | 3000 ppm Erucasäureamid |
| Statischer Reibwert (COF gemessen nach ISO 8295) | |
| an der Siegelschicht 0,30 | |
| Vergleichsbeispiel 2 | |
| Bedruckbare Außensicht (15µm): | |
| | 40 % Stärke-Compound⁺⁾ |
| | Polyethylen (LDPE+LMDPE) |
| Kernschicht (30µm): | |
| | 50 % Stärke-Compound⁺⁾ |
| | Polyethylen (LDPE+LLDPE) |
| Siegelschicht (15µm): | |
| | 30 % Stärke-Compound⁺⁾ |
| | Polyethylen (LDPE+LLDPE) |
| | 4500 ppm Erucasäureamid |
| Statischer Reibwert (COF gemessen nach ISO 8295) | |
| an der Siegelschicht 0,20 | |

| | |
|---|---|
| ⁺⁾Stärke-Compound: 66 % TPS (Stärke plus native Verarbeitungshilfsmittel), Kompatibilisatoren und Polyolefin. | |

## Patentansprüche

1. Mehrschichtige, durch Coextrusion hergestellte Folie, insbesondere Verpackungsfolie, mit einer aus einer Kernschichtmischung gebildeten Kernschicht, einer Siegelschicht aus einer siegelfähigen Siegelschichtmischung und einer bedruckbaren Außenschicht aus einer Außenschichtmischung, wobei die Kernschichtmischung, die Siegelschichtmischung und die Außenschichtmischung jeweils zumindest 5 Gew.-% einer Stärke und jeweils zumindest ein synthetisches Polymer enthalten, wobei in der Kernschichtmischung und der Siegelschichtmischung jeweils ein Gleitmittel enthalten ist und wobei der Gleitmittelanteil der Kernschichtmischung mindestens 20 % des Gleitmittelanteils der Siegelschichtmischung beträgt.

2. Mehrschichtige Folie nach Anspruch 1, wobei der Gleitmittelanteil der Siegelschichtmischung größer ist als der Gleitmittelanteil der Kernschichtmischung.

3. Mehrschichtige Folie nach Anspruch 1 oder 2, wobei der Gleitmittelanteil der Kernschichtmischung 30 % bis 70 % des Gleitmittelanteils der Siegelschichtmischung beträgt.

4. Mehrschichtige Folie nach einem der Ansprüche 1 bis 3, wobei der Gleitmittelanteil der Siegelschichtmischung 1000 ppm bis 6000 ppm und der Gleitmittelanteil der Kernschichtmischung 500 ppm bis 6000 ppm beträgt.

5. Mehrschichtige Folie nach Anspruch 4, wobei der Gleitmittelanteil der Siegelschichtmischung einen Wert zwischen 2000 und 4000 ppm aufweist und der Gleitmittelanteil der Kernschichtmischung zwischen 1000 und 3000 ppm liegt.

6. Mehrschichtige Folie nach einem der Ansprüche 1 bis 5, wobei das Produkt aus dem Gleitmittelanteil (gemessen in ppm) und der Schichtdicke (gemessen in µm) in der Siegelschicht zwischen 30.000 und 90.000 ppm x µm und in der Kernschicht zwischen 15.000 und 90.000 ppm x µm beträgt.

7. Mehrschichtige Folie nach Anspruch 6, wobei das Produkt aus dem Gleitmittelanteil und der Schichdicke in der Kernschicht sowie in der Siegelschicht zwischen 30.000 und 60.000 ppm x µm beträgt.

8. Mehrschichtige Folie nach einem der Ansprüche 1 bis 7, wobei das Gleitmittel ein Fettsäureamid ist.

9. Mehrschichtige Folie nach Anspruch 8, wobei das Gleitmittel zumindest eine Komponente aus der Gruppe "Erucasäureamik, Ölsäureamid, Stearinsäureamid" ist.

10. Mehrschichtige Folie nach einem der Ansprüche 1 bis 9, wobei der Stärkegehalt der Folie größer als 10 Gew.-% ist.

11. Mehrschichtige Folie nach einem der Ansprüche 1 bis 10, wobei die Stärke eine thermoplastische Stärke ist.

12. Mehrschichtige Folie nach einem der Ansprüche 1 bis 11, wobei das synthetische Polymer ein Polyolefin ist.

13. Mehrschichtige Folie nach einem der Ansprüche 1 bis 12, wobei das synthetische Polymer ein Blend aus einem Polyolefin und einem weiteren Polyolefin und/oder einem Polyester ist.

14. Mehrschichtige Folie nach einem der Ansprüche 1 bis 13, wobei die Folie eine Dicke von 10 bis 200 µm aufweist.

## Claims

1. Multilayer film produced by co-extrusion, in particular packaging film, comprising a core layer formed from a core layer mixture, a sealing layer comprising a sealable sealing layer mixture, and a printable outer layer comprising an outer layer mixture, wherein the core layer mixture, the sealing layer mixture and the outer layer mixture each contain at least 5 wt.% of a starch and at least one synthetic polymer, wherein the core layer mixture and the sealing layer mixture each contain a slip agent and wherein the slip agent proportion of the core layer mixture is at least 20% of the slip agent proportion of the sealing layer mixture.

2. The multilayer film according to claim 1, wherein the slip agent proportion of the sealing layer mixture is greater than the slip agent proportion of the core layer mixture.

3. The multilayer film according to claim 1 or 2, wherein the slip agent proportion of the core layer mixture is 30% to 70% of the slip agent proportion of the sealing layer mixture.

4. The multilayer film according to any one of claims 1 to 3, wherein the slip agent proportion of the sealing layer mixture is 1000 ppm to 6000 ppm and the slip agent proportion of the core layer mixture is 500 ppm to 6000 ppm.

5. The multilayer film according to claim 4, wherein the slip agent proportion of the sealing layer mixture has a value between 2000 and 4000 ppm and the slip agent proportion of the core layer mixture is between 1000 and 3000 ppm.

6. The multilayer film according to any one of claims 1 to 5, wherein the product of the slip agent proportion (measured in ppm) and the layer thickness (measured in µm) in the sealing layer is between 30,000 and 90,000 ppm x µm and in the core layer is between 15,000 and 90,000 ppm x µm.

7. The multilayer film according to claim 6, wherein the product of the slip agent proportion and the layer thickness in the core layer and in the sealing layer is between 30,000 and 60,000 ppm x µm.

8. The multilayer film according to any one of claims 1 to 7, wherein the slip agent is a fatty acid amide.

9. The multilayer film according to claim 8, wherein the slip agent is at least one component of the group "erucic acid amide, oleic acid amide, stearic acid amide".

10. The multilayer film according to any one of claims 1 to 9, wherein the starch content of the film is greater than 10 wt.%.

11. The multilayer film according to any one of claims 1 to 10, wherein the starch is a thermoplastic starch.

12. The multilayer film according to any one of claims 1 to 11, wherein the synthetic polymer is a polyolefin.

13. The multilayer film according to any one of claims 1 to 12, wherein the synthetic polymer is a blend of a polyolefin and another polyolefin and/or a polyester.

14. The multilayer film according to any one of claims 1 to 13, wherein the film has a thickness of 10 to 200 µm.

## Revendications

1. Film coextrudé multicouches, en particulier film d'emballage, comprenant une couche centrale composée d'un mélange de couches centrales, une couche de scellement d'un mélange de couches de scellement pouvant être scellées et une couche extérieure imprimable d'un mélange de couches extérieures, dans lequel le mélange de couches centrales, le mélange de couches de scellement et le mélange de couches extérieures contiennent respectivement au moins 5 % en poids d'un empois et respectivement au moins un polymère synthétique, dans lequel un lubrifiant est contenu respectivement dans le mélange de couches centrales et le mélange de couches de scellement, et dans lequel la teneur en lubrifiant du mélange de couches centrales fait au moins 20 % de la teneur en lubrifiant du mélange de couches de scellement.

2. Film multicouches selon la revendication 1, dans lequel la teneur en lubrifiant du mélange de couches de scellement est supérieure à la teneur en lubrifiant du mélange de couches centrales.

3. Film multicouches selon la revendication 1 ou 2, dans lequel la teneur en lubrifiant du mélange de couches centrales fait 30 % à 70 % de la teneur en lubrifiant du mélange de couches de scellement.

4. Film multicouches selon l'une des revendications 1 à 3, dans lequel la teneur en lubrifiant du mélange de couches de scellement fait 1000 ppm à 6000 ppm et la teneur en lubrifiant du mélange de couches centrales fait 500 ppm à 6000 ppm.

5. Film multicouches selon la revendication 4, dans lequel la teneur en lubrifiant du mélange de couches de scellement présente une valeur entre 2000 ppm et 4000 ppm et la teneur en lubrifiant du mélange de couches centrales est située entre 1000 ppm et 3000 ppm.

6. Film multicouches selon l'une des revendications 1 à 5, dans lequel le produit de la teneur en lubrifiant (mesurée en ppm) et de l'épaisseur de couche (mesurée en µm) dans la couche de scellement est situé entre 30.000 et 90.000 ppm x µm et entre 15.000 et 90.000 ppm x µm dans la couche centrale.

7. Film multicouches selon la revendication 6, dans lequel le produit de la teneur en lubrifiant et de l'épaisseur de couche dans la couche centrale ainsi que dans la couche de scellement est situé entre 30.000 et 60.000 ppm x µm.

8. Film multicouches selon l'une des revendications 1 à 7, dans lequel le lubrifiant est un amide d'acides gras.

9. Film multicouches selon la revendication 8, dans lequel le lubrifiant est au moins une composante du groupe « amide d'acide érucique, amide d'acide oléique, amide d'acide stéarique ».

10. Film multicouches selon l'une des revendications 1 à 9, dans lequel la teneur en empois du film est supérieure à 10 % en poids.

11. Film multicouches selon l'une des revendications 1 à 10, dans lequel l'empois est un empois thermoplastique.

12. Film multicouches selon l'une des revendications 1 à 11, dans lequel le polymère synthétique est une polyoléfine.

13. Film multicouches selon l'une des revendications 1 à 12, dans lequel le polymère synthétique est un mélange d'une polyoléfine et d'une autre polyoléfine et/ou d'un polyester.

14. Film multicouches selon l'une des revendications 1 à 13, dans lequel le film présente une épaisseur de 10 à 200 µm.
